# EUROPÄISCHE PATENTSCHRIFT

(11) **EP 3 896 405 B1**
(45) Veröffentlichungstag und Bekanntmachung des Hinweises auf die Patenterteilung: **18.10.2023**
(21) Anmeldenummer: 21167982.4
(22) Anmeldetag: 13.04.2021
(51) Int. Cl.: G01F 23/18, G01F 23/292, G01F 22/00

(54) **VORRICHTUNG ZUR SCHÜTTGUTFÜLLSTANDERFASSUNG SOWIE SYSTEM**
DEVICE FOR DETECTING BULK MATERIAL FILL LEVEL AND SYSTEM
DISPOSITIF DE DÉTECTION DU NIVEAU DE REMPLISSAGE DES MATIÈRES EN VRAC, AINSI QUE SYSTÈME

(30) Priorität: 14.04.2020 DE 202020102044 U
(43) Veröffentlichungstag der Anmeldung: 20.10.2021
(73) Patentinhaber: Mall GmbH, 78166 Donaueschingen-Pfohren (DE)
(72) Erfinder: HÜTTINGER, Clemens, 78333 Stockach (DE)
(74) Vertreter: Patent- und Rechtsanwälte Behrmann Wagner PartG mbB

(56) Entgegenhaltungen:
- WO-A2-2014/200578
- US-A- 3 995 168
- US-A1- 2013 092 851
- US-B1- 8 072 594

## Beschreibung

Die vorliegende Erfindung betrifft eine Vorrichtung zum Erfassen des Füllstandes nach Anspruch 1. Ferner betrifft die vorliegende Erfindung ein System umfassend eine erfindungsgemäße Schüttgutfüllstanderfassungsvorrichtung.

Aus dem gattungsbildenden Stand der Technik sind unterschiedliche Füllstanderfassungsvorrichtungen zum Erfassen eines Schüttgutfüllstandes in einer Speichereinheit bekannt.

Beispielsweise wird bei einer ersten Gruppe bekannter Füllstanderfassungsvorrichtungen durch Schwingelemente oder Hallsensoren eine ein Schüttgut aufnehmende Speichereinheit auf das Erreichen eines zuvor definierten Füllstands überwacht. Sinkt in der Speichereinheit das Schüttgut unter die überwachte Grenze, wird ein Signal generiert, um durch rechtzeitiges Nachfüllen das vollständige Entleeren der Speichereinheit zu vermeiden. Derartige Vorrichtungen zum Erfassen des Füllstandes an nur einer einzigen Position erlauben bei einer konstanten und bekannten Schüttgutentnahme eine grobe Abschätzung über die verbleibende Betriebszeit des Verbrauchssystems. Allerdings trifft dies nicht auf eine Speichereinheit zu, deren Schüttgutentnahme stark schwankt.

Ferner ist auch eine zweite Gruppe von Vorrichtungen zum Erfassen des Füllstandes von Schüttgut bekannt, die ein kontinuierliches Messen des Schüttgutfüllstandes in der Speichereinheit erlauben. Hierzu weisen die bekannten Vorrichtungen eine Sende- und Erfassungseinheit auf, die zum Aussenden von strahlungsbasierten Sensorsignalen ausgebildet ist, deren am Schüttgut zurückgeworfene Sensorsignale (Reflexionen) wieder erfasst werden. Somit kann über eine Laufzeitmessung zwischen dem Senden und wieder Erfassen der zurückgeworfenen Sensorsignale der Füllstand in der Vorratseinheit bestimmt werden. Allerdings sind derartige laufzeitbasierte Messvorrichtungen nicht nur in der Anschaffung teuer, sondern sind auch in staubigen Betriebsumgebungen besonders fehleranfällig. Die ausgestrahlten Sensorsignale können nämlich an einem Staub-Luft-Gemisch reflektiert und/oder gestreut werden. Neben dieser Messempfindlichkeit gegenüber einer hohen Staubkonzentration, die zu einer fehlerbehafteten Füllstandanzeige führt, kann es bei bestimmten Staub-Luft-Gemischen durch das abgestrahlte Sensorsignal auch zu einer Explosion kommen (Staubexplosion), weshalb derartige Systeme teilweise bei bestimmten Schüttgütern nicht einsetzbar sind.

Ferner ist aus dem Stand der Technik die WO 2014/200578 A2 bekannt, die eine Füllstanderfassungsvorrichtung für einen Getreidetank mit einer Sensoreinheit, umfassend Leuchtmittel und Lichterfassungsmittel. Weiterhin wird auch eine Recheneinheit zum Bestimmen des Schüttgutfüllstandes aus den Sensorsignalen, Kommunikationsmittel, die zum Auslesen von Sensorsignalen der Sensoreinheit ausgebildet sind, Logikmittel, die zum Auswerten der Sensorsignale und zum Bestimmen eines Schüttgutfüllstandes des Getreidetanks ausgebildet sind und eine Anzeigeeinheit offenbart.

Ausgehend von dem vorgenannten Stand der Technik ist es Aufgabe der vorliegenden Erfindung eine Vorrichtung zum Erfassen eines Füllstandes von Schüttgut in einem Vorratsspeicher sowie ein eine erfindungsgemäße Füllstanderfassungsvorrichtung umfassendes System anzugeben, welche die aus dem Stand der Technik bekannten Nachteile überwinden. Insbesondere soll es hierbei möglich sein, dass die Speichereinheit unabhängig vom verwendeten Schüttgut auf mehr als einen Füllstand überwacht werden kann.

Die Aufgabe wird durch eine Vorrichtung zum Erfassen des Füllstands eines Schüttguts in einer Speichereinheit nach den Merkmalen des Anspruchs 1 gelöst. Vorteilhafte Weiterbildungen der Erfindung sind in den Unteransprüchen beschrieben.

Zusätzlich wird im Rahmen der vorliegenden Erfindung auch Schutz für ein System beansprucht, das eine erfindungsgemäße Vorrichtung umfasst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

In erfindungsgemäß vorteilhafter Weise umfasst die Schüttgutfüllstanderfassungsvorrichtung eine Sensoreinheit mit Leuchtmitteln und Lichterfassungsmitteln, eine Recheneinheit mit Kommunikationsmitteln zum Auslesen von Sensorsignalen (insbesondere Sensorausgangssignalen) der Sensoreinheit sowie mit Logikmitteln zum Auswerten der ausgelesenen Sensorsignale, um den Schüttgutfüllstand der überwachten Speichereinheit zu bestimmen sowie eine Anzeigeeinheit, die zum Anzeigen und/oder Ausgeben des ermittelten Schüttgutfüllstandes der Speichereinheit ausgebildet ist.

Die erfindungsgemäße Sensoreinheit umfasst Leuchtmittel zum Erzeugen von Licht, das insbesondere durch eine vorgesehene Optik und/oder Linse gestreut in die Speichereinheit abgestrahlt wird. Vorteilhaft ermöglicht dies das Be- und/oder Ausleuchten der Speichereinheit. Hierbei kann sichtbares Licht mit einer beliebigen Wellenlänge, Licht eines definierten Spektrums (Bereich mit einer bestimmten Wellenlänge) oder Licht mit nur einer bestimmten Wellenlänge eingesetzt werden. Ferner weist die erfindungsgemäße Sensoreinheit auch Lichterfassungsmittel auf, die zum Erfassen des mit den Leuchtmitteln erzeugten Lichts ausgebildet und somit auf das Zusammenwirken mit den Leuchtmitteln ausgerichtet sind. Die Lichterfassungsmittel können als Photodetektor, optischer Detektor oder dergleichen optoelektronisches Bauelement ausgebildet sein, das beispielsweise baulich konkret durch eine Photozelle, eine Photodiode oder einen CMOS-Sensor ausgebildet ist. Das so generierte Sensorausgangssignal kann ein digitaler Messwert oder ein analoger Messwert, etwa eine analoge Spannung sein, deren Wert (Betrag der Spannung) von der erfassten Helligkeit oder von der Intensität der erfassten Lichtstrahlen abhängt. Im einfachsten Fall kann hierbei das Lichterfassungsmittel beim Erfassen von Lichtstrahlen eine bestimmte Analogspannung und beim Erfassen von keinen Lichtstrahlen keine Spannung, also 0V, oder umgekehrt, ausgeben. Aber es sind auch andere Sensorausgangssignale denkbar und im Rahmen der vorliegenden Erfindung möglich.

Ferner erfüllt die Sensoreinheit bevorzugt die Richtlinie nach ATEX 22 und kann somit auch in staubhaltiger Atmosphäre problemlos eingesetzt werden. Zudem ist die Sensoreinheit insbesondere auch konform mit der Schutzart 54 und hierdurch im besonderen Maße gegenüber Staub und Spitzwasser geschützt.

Weiterbildend führt die Vorrichtung zum Erfassen des Schüttgutfüllstandes, also sämtliche von der Vorrichtung umfassten Komponenten und/oder Bauteile, lediglich Spannungen im Bereich der Kleinspannung, um vorteilhaft bei der Produktion sowie im Betrieb geringe Maßnahmen zum Schutz von Personen erfüllen zu müssen. Dies bedeutet, dass elektrische Spannungen im Bereich der Niederspannung für Wechselspannung (AC) 50V und für Gleichspannung (DC) 120V nicht überschritten werden. Ferner umfassen die Komponenten der Schüttgutfüllstanderfassungsvorrichtung bevorzugt eine gekapselte Bauweise, um besonderes robust gegenüber Feuchtigkeit sowie Staub zu sein und somit einen langlebigen und zuverlässigen Betrieb zu ermöglichen.

Die erfindungsgemäße Recheneinheit mit den Kommunikationsmitteln und den Logikmitteln ist zum Bestimmen des Schüttgutfüllstandes ausgebildet. Hierfür werden zunächst mittels der Kommunikationsmittel die Sensorsignale (insbesondere Sensorausganssignale) der Sensoreinheit bzw. der Lichterfassungsmittel ausgelesen. Die Kommunikationsmittel können durch eine drahtgebundene Kommunikationsleitung oder eine drahtlose Funkverbindung ausgebildet sein. Bei der Datenübermittlung ist eine digitale oder analoge Übertragungstechnik möglich. Zudem umfasst die Recheneinheit Logikmittel, die etwa als Mikrocontroller oder CPU ausgebildet sein können, um die ausgelesenen Messwerte weiterzuverarbeiten. Beim Verarbeiten der Daten kann es insbesondere vorgesehen sein, dass die Messwerte in eine Zeit- oder Mengenangabe umgerechnet werden, die einem Nutzer eine Auskunft über die verbleibende Schüttgutmenge in der Speichereinheit liefern. Alternativ können die Logikmittel auch nur zum Auslesen der Sensorausgangssignale ausgebildet sein, wobei das ausgelesene Sensorausgangssignal dann unmittelbar oder mittelbar weiterverarbeitet wird.

Die erfindungsgemäße Anzeigeeinheit kann ein Display zur Ausgabe des ermittelten Schüttgutfüllstandes umfassen. Alternativ oder zusätzlich können auch nur Anzeigeelemente, etwa mehrere Leuchtdioden, vorhanden sein, deren leuchtender oder nichtleuchtender Zustand eine optische Ausgabe des Füllzustands der überwachten Speichereinheit ermöglicht.

Ferner ist es erfindungsgemäß vorgesehen, dass die Lichterfassungsmittel durch mehrerer lichtempfindliche Sensoren ausgebildet sind, wobei jeder einzelne der lichtempfindlichen Sensoren unabhängig von den restlichen lichtempfindlichen Sensoren zum Erfassen von Lichtstrahlen und/oder zum Detektieren von einer Helligkeit ausgebildet ist. Somit wird es weiterbildend vorteilhaft möglich, dass der Füllstand des Schüttguts an mehreren Positionen in der Speichereinheit erfasst werden kann, um somit eine genauere Auskunft über den Füllstand zu ermöglichen.

Ferner ist es im Rahmen der Erfindung vorgesehen, dass sämtliche lichtempfindliche Sensoren entlang einer Erstreckungsachse E angeordnet sind, wobei die einzelnen lichtempfindlichen Sensoren jeweils in einem Abstand A zueinander beabstandet angeordnet sind.

In einer vorteilhaften baulichen Ausgestaltung ist es hierbei bevorzugt vorgesehen, dass die lichtempfindlichen Sensoren auf einer (Sensor-)Leiste oder Trägereinheit angeordnet sind. Vorteilhaft ermöglicht dies das einfache Nachrüsten von bereits in Betrieb genommenen Speichereinheiten mit einer erfindungsgemäßen Füllstanderfassungsvorrichtung. Die Trägereinheit kann aus Kunststoff oder Holz ausgebildet sein. Zudem ist auch eine Ausführungsform aus Metall denkbar. Der Abstand A beträgt zwischen 5cm bis 1m, bevorzugt 10cm bis 50cm, weiter bevorzugt 20cm bis 30cm.

Zudem ist es weiterbildend vorgesehen, dass die erfindungsgemäße Vorrichtung mehrere Leuchtdioden umfasst, um die Leuchtmittel auszubilden. Vorteilhaft lassen sich somit an unterschiedlichen Positionen in der Speichereinheit Licht bzw. Lichtstrahlen erzeugen, um diese mit den entsprechend zusammenwirkenden Lichterfassungsmitteln bzw. den lichtempfindlichen Sensoren wieder zu erfassen. Somit kann die Leistung einer (Haupt- )Lichtquelle auf mehrere (Teil-)Lichtquellen aufgeteilt werden, weshalb sich Kostenvorteile ergeben. Ferner kann hierbei vorteilhaft die Zuverlässigkeit der vorliegenden Vorrichtung gesteigert werden, da der ordnungsgemäße Betrieb, also die Schüttgutfüllstandbestimmung, auch noch nach dem Ausfall von einer Leuchtdiode möglich ist, da es noch zur Lichterzeugung durch die restlichen, nicht ausgefallenen Leuchtdioden kommt.

Zudem zeigt eine bevorzugte Weiterbildung dieser Ausführungsform, dass die Mehrzahl an Leuchtdioden, insbesondere sämtliche Leuchtdioden, auch entlang einer Erstreckungsachse E angeordnet ist/sind und voneinander durch einen Abstand B getrennt angeordnet ist/sind. Auch in diesem Zusammenhang ist es bevorzugt vorgesehen, dass sämtliche Leuchtdioden auf einer (Sensor-)Leiste, insbesondere der identischen (Sensor-)Leiste wie die lichtempfindlichen Sensoren, oder auf einer anderen Trägereinheit angeordnet sind, wobei hierbei insbesondere die Mehrzahl an Leuchtdioden und die Mehrzahl an lichtempfindlichen Sensoren entlang einer identischen Erstreckungsachse E angeordnet sind und/oder auf derselben Sensorleiste oder demselben Träger vorgesehen sind. Vorteilhaft ermöglicht dies eine besonders einfache Installation oder Nachrüstung der Füllstanderfassungsvorrichtung in einer Speichereinheit bzw. in eine bestehende Speichereinheit.

Weiterbildend ist es in diesem Zusammenhang vorgesehen, dass zwischen zwei voneinander beabstandeten Leuchtdioden wenigstens ein lichtempfindlicher Sensor angeordnet ist und/oder dass zwischen zwei voneinander beabstandeten lichtempfindlichen Sensoren wenigstens eine Leuchtdiode angeordnet ist. Hierbei ist es besonders bevorzugt, wenn als unterstes Element ein lichtempfindlicher Sensor angeordnet ist, der dazu ausgebildet ist zumindest die Lichtstrahlen von einer entlang der Erstreckungsachse E beabstandeten Leuchtdiode zu erfassen. Somit kann vorteilhaft ein in Anhängigkeit des Verbrauchsystems gewählte Restmenge an Schüttgut (Notreserve) erfasst werden, die dann eventuell zusätzlich eine Füllstandsinformation an den Betreiber auslöst.

Ferner umfasst eine bevorzugte Ausgestaltung auch zwei oder mehr Gruppen von Leuchtdioden und/oder lichtempfindlichen Sensoren, wobei die Leuchtdioden und/oder lichtempfindlichen Sensoren von jeder Gruppe entlang jeweils einer Erstreckungsachse (E1 oder E2) angeordnet sind. Mit anderen Worten sind die Elemente (Leuchtdioden und/oder lichtempfindlichen Sensoren) der ersten Gruppe entlang einer ersten Erstreckungsachse E1 angeordnet und die Elemente der wenigstens zweiten Gruppe entlang wenigstens einer zweiten Erstreckungsachse E2 angeordnet. In Abhängigkeit der geometrischen Dimension und/oder Erstreckung der Speichereinheit sind die verschiedenen Erstreckungsachsen bevorzugt zueinander parallel ausgerichtet. Alternativ ist jedoch auch eine nicht parallele Ausrichtung zum Erfassen von Teilbereichen der Speichereinheit im Rahmen bevorzugter Weiterbildungen vorgesehen.

Ferner ist es im Rahmen der vorliegenden Erfindung vorgesehen, dass der Abstand A1 zwischen einem ersten lichtempfindlichen Sensor und einem zweiten lichtempfindlichen Sensor kleiner dimensioniert ist als der Abstand zwischen dem zweiten lichtempfindlichen Sensor und einem dritten lichtempfindlichen Sensor, wobei die Sensoren insbesondere entlang einer Erstreckungsachse E angeordnet sind und der erste lichtempfindliche Sensor in Bezug auf eine Hocherstreckung H einer Speichereinheit in Bezug auf die restlichen lichtempfindlichen Sensoren am tiefsten angeordnet ist, also zum Detektieren eines niedrigen Füllstandes vorgesehen ist. Vorteilhaft ermöglicht dies eine Abstufung beim Erfassen des Füllstands, um bei einem niedrigen Niveau des Schüttguts in der Speichereinheit eine höhere Auflösung zu realisieren.

Ferner umfasst eine bevorzugte Weiterbildung, dass die Anzeigemittel und die Recheneinheit nicht separat angeordnet sind sondern eine gemeinsame Einheit und/oder ein gemeinsames Modul ausbilden. Besonders bevorzugt ist in diesem Zusammenhang, wenn die entsprechenden Komponenten der vorliegenden Vorrichtung in einer gemeinsamen Gehäuseeinheit angeordnet sind. Ferner ist es bevorzugt, wenn die Recheneinheit eine Kommunikationseinheit umfasst, die dazu ausgebildet und eingerichtet ist, mit einem, insbesondere öffentlichen, Kommunikations- und/oder Datennetz - etwa dem Internet - Daten auszutauschen oder zumindest eine entsprechende Infrastruktur für das Übermitteln von Füllständen zu nutzen.

Auch ist es weiterbildend vorgesehen, dass die Recheneinheit bzw. die Kommunikationsmittel zum kontinuierlichen Datenaustausch mit der Sensoreinheit ausgebildet ist, um eine Echtzeitwiedergabe des Füllstands zu ermöglichen. Alternativ ist auch eine Ausbildung und/oder Einrichtung der Komponenten möglich und im Rahmen der vorliegenden Erfindung weiterbildend vorgesehen, bei der nur zu bestimmten Zeiten, also zu diskreten Zeitpunkten, insbesondere in Reaktion auf einen Steuerbefehl, ein Datenabruf zum Übermitteln der Sensorsignale (insbesondere Sensorausgangssignale) erfolgt. Neben dem Anpassen der Zeitspannen (Frequenz und/oder Wiederholungsrate) eines Datenabrufs ist es weiterbildend auch vorgesehen, dass die Reihenfolge beim Auslesen der lichtempfindlichen Sensoren variiert werden kann. Hierbei ist es bevorzugt vorgesehen, dass beim Erreichen eines niedrigen Füllstandes auch nur die in der Speichereinheit entsprechend niedriger angeordneten lichtempfindlichen Sensoren ausgelesen werden. Weiterbildend kann bei einem hohen Füllstand auch nur jeder zweite Sensor ausgelesen werden.

Zudem wird im Rahmen der vorliegenden Erfindung auch Schutz für ein eine Speichereinheit aufweisendes System beansprucht, das eine erfindungsgemäße Vorrichtung zum Erfassen des Schüttgutfüllstandes in der Speichereinheit umfasst. Die Sensoreinheit wird hierbei derart in der Speichereinheit angeordnet, dass das Schüttgut durch die Lichterfassungsmittel detektiert werden kann. Hierfür wird ermittelt, ob das in der Speichereinheit gelagerte Schüttgut die Lichterfassungsmittel bzw. einen lichtempfindlichen Sensor verdeckt, woraus sich der Füllstand bestimmen lässt. Der ermittelte Füllstand wird an die Anzeigeeinheit übermittelt und dort entsprechend dargestellt.

Ferner ist in einer besonders bevorzugten Ausgestaltung die Speichereinheit als Pellet- oder Hackschnitzelspeicher ausgebildet, wobei es vorteilhaft beim Nachfüllen der Pellets oder Hackschnitzel zu einer Reinigung der Sensoreinheit, insbesondere der Leuchtmittel sowie der Lichterfassungsmittel kommt, da Staub und/oder Schmutzpartikel, die sich auf der Sensoreinheit festgesetzt haben, von der Sensoreinheit durch die Pellets gelöst werden.

Ein weitergebildetes System umfasst ferner auch einen externen Empfänger, der zum Empfangen von Füllstandsinformationen ausgebildet und/oder eingerichtet ist. Bevorzugt ist der externe Empfänger als Mobiltelefon, insbesondere Smartphone, ausgebildet, wobei durch ein Datenverarbeitungsprogramm, insbesondere eine App, die Informationen übersichtlich angezeigt werden können. Neben der Anzeige von Füllständen kann hierbei auch ein zuvor eingerichteter Bestellvorgang ausgelöst werden, um beispielsweise Schüttgut, wie Pellets, vom lokalen Händler zu ordern, um somit eine vollständige Entleerung der Speichereinheit - mit einem entsprechenden Ausfall einer Heizleistung - zu vermeiden.

Weitere Vorteile, Merkmale und Einzelheiten der Erfindung ergeben sich aus der nachfolgenden Beschreibung bevorzugter Ausführungsbeispiele sowie anhand der Zeichnungen, diese zeigen in:
- Fig. 1:: eine schematische Darstellung einer bevorzugten Ausführungsform der erfindungsgemäßen Vorrichtung zum Erfassen eines Schüttgutfüllstandes in einer Speichereinheit, in
- Fig. 2:: in schematischer Darstellung eine Speichereinheit, die eine runde Grundfläche aufweist und abschnittsweise wie ein Hohlzylinder ausgebildet ist, wobei an der Innenwand der Speichereinheit die aus der Fig. 1 bekannte Sensoreinheit zur Schüttgutfüllstandbestimmung angeordnet ist und in
- Fig. 3:: eine Schnittdarstellung eines Systems, umfassend eine besonders bevorzugte erfindungsgemäße Füllstanderfassungsvorrichtung.

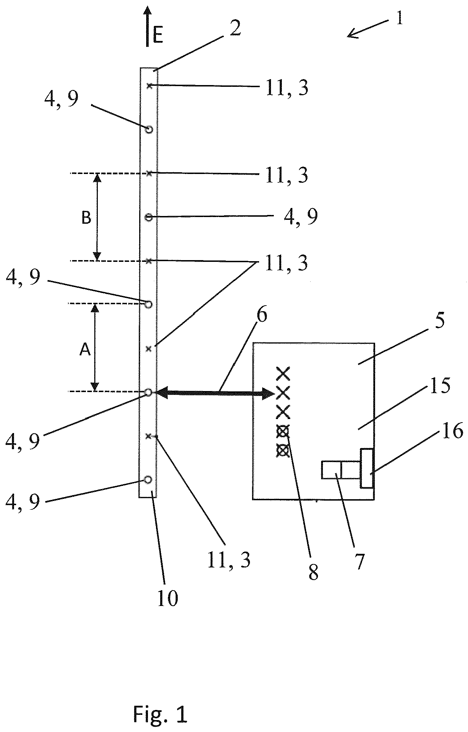

In der Fig. 1 ist eine schematische Darstellung einer bevorzugten Ausgestaltung der erfindungsgemäßen Vorrichtung 1 zum Erfassen eines Schüttgutfüllstands (Füllstandserfassungsvorrichtung) in einer nicht in der Fig. 1 dargestellten Speichereinheit abgebildet.

Die dargestellte erfindungsgemäße Vorrichtung 1 umfasst eine Sensoreinheit 2, die Leuchtmittel 3 und Lichterfassungsmittel 4 aufweist, eine Recheneinheit 5 mit Kommunikationsmitteln 6 und Logikmitteln 7 sowie eine Anzeigeeinheit 8 zur Ausgabe der Füllstandsinformationen.

In der dargestellten Ausführungsform sind die Leuchtmittel 3 durch eine Mehrzahl von einzelnen Leuchtdioden 11 ausgebildet, die auf einer Sensorleiste 10 entlang einer gemeinsamen Erstreckungsachse E, jeweils um einen Abstand B voneinander beanstandet angeordnet sind.

Ferner geht aus der Fig. 1 hervor, dass auch die Lichterfassungsmittel 4 durch mehrere einzelne und voneinander getrennt angeordnete lichtempfindliche Sensoren 9 ausgebildet sind. Die einzelnen lichtempfindlichen Sensoren 9 sind ebenfalls auf der bereits erwähnten Sensorleiste 10 angeordnet und erstrecken sich somit auch entlang der (identischen) Erstreckungsachse E, wobei zwischen zwei benachbarten lichtempfindlichen Sensoren 9 jeweils ein Abstand A besteht.

Die erfindungsgemäße Recheneinheit 5 ist zum Bestimmen von Schüttgutfüllstandsinformationen ausgebildet. Hierfür werden zunächst Sensorsignale der Sensoreinheit 2 ausgelesen, die dann von den Logikmitteln 7 der Recheneinheit 5 ausgewertet und verarbeitet werden, um den Schüttgutfüllstand der Speichereinheit zu bestimmen.

Zum Auslesen der Sensorsignale umfasst die Recheneinheit 5 die bereits erwähnten Kommunikationsmittel 6, die entweder kabelgebunden oder drahtlos realisiert sein können. Ferner ist in der Fig. 1 auch die schematisch dargestellte Anzeigeeinheit 8 abgebildet, die als Modul mit der Recheneinheit 5 in einer gemeinsamen Gehäuseeinheit 15 angeordnet ist.

Die Füllstandinformationsausgabe auf der Anzeigeeinheit 8 wird durch fünf vertikal zueinander angeordnete LED-Dioden realisiert, deren Zustand (leuchtend oder nicht leuchtend) den aktuellen Füllstand der Speichereinheit abbilden.

Auch aus der Fig. 1 lässt sich erkennen, dass grundsätzlich - mit Ausnahme der beiden Endbereiche - zwischen zwei unmittelbar voneinander beabstandeten (und zueinander unmittelbar benachbart angeordneten) Leuchtdioden 11 auf der Sensorleiste 10 jeweils ein lichtempfindlicher Sensor 9 angeordnet ist. Ferner ist - mit Ausnahme der beiden Endbereiche - zwischen zwei voneinander unmittelbar beabstandeten (und unmittelbar benachbarten) lichtempfindlichen Sensoren 9 somit entsprechend auch jeweils eine Leuchtdiode 11 angeordnet.

Schließlich ist in der Fig. 1 noch eine Kommunikationseinheit 16 schematisch dargestellt, die mit der erfindungsgemäßen Recheneinheit 5 in Wirkverbindung steht. Durch die Kommunikationseinheit 16 ist ein Datenaustausch über ein öffentliches Kommunikationsnetz möglich. In einer konkreten Ausgestaltung ist die Kommunikationseinheit 16 hierfür als Mobilfunk-Modul, insbesondere LTE-Modul, ausgebildet, um das frei zugängliche Kommunikationsnetz für eine Übermittlung von Steuerbefehlen oder Füllstandsinformationen an einen Kommunikationspartner zu nutzen. Hierbei wird ein entsprechend ausgebildeter Kommunikationspartner bevorzugt durch ein Smartphone ausgebildet, wobei die Informationsanzeige in Form eines Datenverarbeitungsprogamms, also insbesondere einer App, realisiert ist.

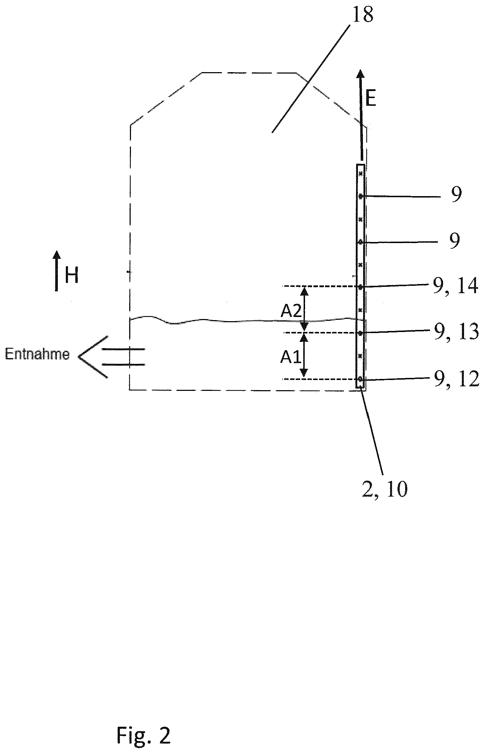

In der Fig. 2 ist die schematische Darstellung der erfindungsgemäßen Sensoreinheit 2 dargestellt, die bereits aus der Fig. 1 bekannt ist. Die als Sensorleiste 10 ausgebildete Sensoreinheit 2 ist nun in einer Speichereinheit 18 dahingehend angeordnet, dass sich die Erstreckungsachse E parallel zu der Hocherstreckung H der Speichereinheit 18 erstreckt.

Durch die Vielzahl lichtempfindlicher Sensoren 9 kann somit der Füllstand des Schüttguts in der Speichereinheit 18 an mehreren Positionen erfasst werden.

Vorteilhaft ist in diesem Zusammenhang zu erwähnen, dass das unterste Element auf der Sensorleiste 10 ein lichtempfindlicher Sensor 9 ist, um somit das Unterschreiten einer Restmenge von Schüttgut in der Speichereinheit 18 zu detektieren. In diesem Zusammenhang kann die nicht in der Fig. 2 dargestellte Recheneinheit 5 auch dahingehend ausgebildet sein, dass beim Unterschreiten dieses letzten Füllstands automatisch ein Bestellvorgang von neuem Schüttgut ausgelöst wird, um eine vollständige Entleerung der Speichereinheit 18 zu vermeiden. Hierbei greift die Recheneinheit 5 bevorzugt auf die Kommunikationseinheit 16 zurück, um eine entsprechende Bestellbenachrichtigung entweder an den Betreiber oder einen Händler zu versenden.

Ferner geht aus der in der Fig. 2 dargestellten Schnittansicht auch hervor, dass die Auflösung bei der Füllstanderfassung von dem gewählten Abstand A der lichtempfindlichen Sensoren 9 abhängig ist. Somit kann durch einen kleinen Abstand A auch eine höhere Auflösung realisiert werden, wobei dann insgesamt mehr lichtempfindliche Sensoren 9 eingesetzt werden müssen, um die vollständige Speichereinheit zu überwachen.

Hierbei ist es denkbar, dass, wie in der Fig. 1 und der Fig. 2 dargestellt, der erste lichtempfindliche Sensor 12 vom zweiten lichtempfindlichen Sensor 13 um einen ersten Abstand A1 beabstandet angeordnet ist und der zweite lichtempfindliche Sensor 13 von einem dritten lichtempfindlichen Sensor 14 um einen zweiten Abstand A2 beabstandet angeordnet ist und dass der erste Abstand A1 sich zum Abstand A2 unterscheidet, um insbesondere bei einem tiefen Füllstand eine höhere und somit genauerer Auflösung bei der Füllstanderfassung des Schüttguts zu realisieren.

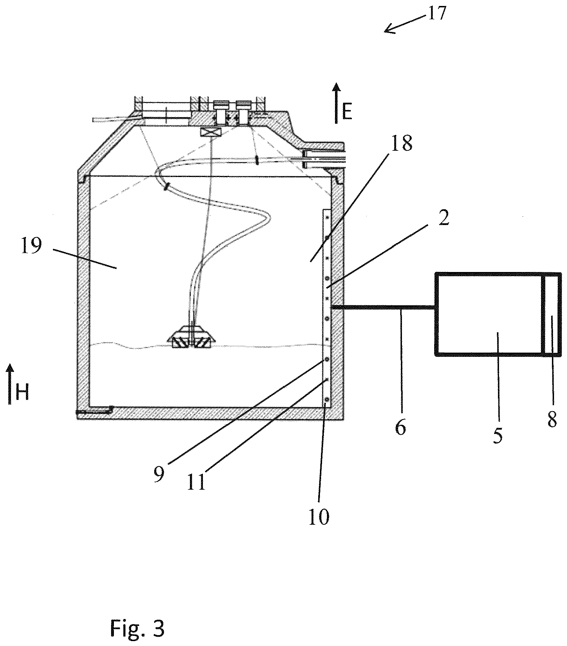

In der Fig. 3 ist ein erfindungsgemäßes System 17 in einer Schnittdarstellung abgebildet, das eine Speichereinheit 18 sowie eine, an der Speichereinheit 18 angeordnete erfindungsgemäße Vorrichtung 1 zur Füllstandbestimmung von Schüttgut der Speichereinheit 18 umfasst. Hierfür ist die als Sensorleiste 10 ausgebildete Sensoreinheit 2 an einer Innenwand der Speichereinheit 18 so angeordnet, dass die Erstreckungsachse E der auf der Sensorleiste 10 angeordneten Elemente (Leuchtdioden 11 und lichtempfindliche Sensoren 9) parallel zu der Hocherstreckung H der Speichereinheit 18 ausgerichtet ist. Bei der in Fig. 3 dargestellten Speichereinheit 18 handelt es sich um einen Pelletspeicher 19, der mit einem Heizsystem in Wirkverbindung steht. Somit hängt die Entnahmerate an Pellets von einer erforderlichen Heizleistung ab, die stark schwanken kann.

Ferner ist in der Fig. 3 auch schematisch die die Kommunikationsmittel 6 aufweisende Recheneinheit 5 dargestellt, die die Sensorsignale der Sensoreinheit 2 ausliest, um somit den Füllstand des Pelletspeichers 19 zu bestimmen und zumindest auf einer Anzeigeeinheit 8 abzubilden.

Im Ergebnis ermöglicht die vorliegende Erfindung auf überraschend einfache Art eine zuverlässige und kostengünstige Füllstandbestimmungsvorrichtung anzugeben, um Speichereinheiten mit unterschiedlichstem Schüttgut zu überwachen.

### Bezugszeichenliste

- 1: Füllstanderfassungsvorrichtung
- 2: Sensoreinheit
- 3: Leuchtmittel
- 4: Lichterfassungsmittel
- 5: Recheneinheit
- 6: Kommunikationsmittel
- 7: Logikmittel
- 8: Anzeigeeinheit
- 9: lichtempfindlicher Sensor
- 10: Sensorleiste
- 11: Leuchtdiode
- 12: erster lichtempfindlicher Sensor
- 13: zweiter lichtempfindlicher Sensor
- 14: dritter lichtempfindlicher Sensor
- 15: Gehäuseeinheit
- 16: Kommunikationseinheit
- 17: System
- 18: Speichereinheit
- 19: Pelletspeicher

- E: Erstreckungsachse

- A: Abstand zw. zwei benachbarten lichtempfindlichen Sensoren
- A1: Abstand zw. einem ersten und einem zweiten lichtemf. Sensor
- A2: Abstand zw. einem zweiten und einem dritten lichtemf. Sensor

- B: Abstand zwischen zwei benachbarten Leuchtdioden

## Patentansprüche

1. Vorrichtung (1) zum Erfassen eines Schüttgutfüllstandes einer Speichereinheit, mit
einer Sensoreinheit (2), ausgebildet zum Ermitteln eines Schüttgutfüllstandes der Speichereinheit, umfassend Leuchtmittel (3) zum Erzeugen von Licht und Lichterfassungsmittel (4) zum Detektieren des erzeugten Lichts,
einer Recheneinheit (5), ausgebildet zum Bestimmen des Schüttgutfüllstandes aus Sensorsignalen der Speichereinheit, umfassend Kommunikationsmittel (6), die zum Auslesen von Sensorsignalen der Sensoreinheit (2) ausgebildet sind und Logikmittel (7), die zum Auswerten der Sensorsignale und zum Bestimmen eines Schüttgutfüllstandes der Speichereinheit ausgebildet sind und
einer Anzeigeeinheit (8), ausgebildet zum Ausgeben und/oder Darstellen des mittels der Recheneinheit (5) bestimmten Schüttgutfüllstandes der Speichereinheit, wobei die Lichterfassungsmittel (4) eine Mehrzahl von lichtempfindlichen Sensoren (9) umfassen, und wobei die lichtempfindlichen Sensoren (9) entlang einer Erstreckungsachse (E), insbesondere auf einer Sensorleiste (10), jeweils voneinander beabstandet um einen Abstand (A, A1, A2) angeordnet sind, **dadurch gekennzeichnet,**
**dass** der Abstand (A1) zwischen einem ersten lichtempfindlichen Sensor (12) und einem zweiten lichtempfindlichen Sensor (13), die zueinander benachbart entlang der Erstreckungsachse (E) angeordnet sind, kleiner ist als der Abstand (A2) zwischen dem zweiten lichtempfindlichen Sensor (13) und einem dritten lichtempfindlichen Sensor (14), die auch zueinander benachbart entlang der Erstreckungsachse (E) angeordnet sind.

2. Vorrichtung nach Anspruch 1,
**dadurch gekennzeichnet,**
**dass** die Leuchtmittel (3) eine Mehrzahl von Leuchtdioden (11) umfassen.

3. Vorrichtung nach Anspruch 2,
**dadurch gekennzeichnet,**
**dass** die Leuchtdioden (11) entlang einer Erstreckungsachse (E), insbesondere auf einer Sensorleiste (10), jeweils um einen Abstand (B) voneinander beabstandet angeordnet sind.

4. Vorrichtung nach Anspruch 2 oder 3,
**dadurch gekennzeichnet,**
**dass** zwischen zwei voneinander beabstandeten Leuchtdioden (11) wenigstens ein lichtempfindlicher Sensor (9) angeordnet ist und/oder dass zwischen zwei voneinander beabstandeten lichtempfindlichen Sensoren (9) wenigstens eine Leuchtdiode (11) angeordnet ist.

5. Vorrichtung nach Anspruch 1 und 3,
**gekennzeichnet durch**
wenigstens zwei Gruppen von Leuchtdioden (11) und/oder lichtempfindlichen Sensoren (9), die entlang einer ersten Erstreckungsachse (E1) und wenigstens einer zweiten Erstreckungsachse (E2) angeordnet sind, wobei insbesondere die erste Erstreckungsachse (E1) und die zweite Erstreckungsachse (E2) parallel zueinander verlaufen.

6. Vorrichtung nach einem der Ansprüche 1 bis 5,
**dadurch gekennzeichnet,**
**dass** die Anzeigeeinheit (8) und die Recheneinheit (5) in einem Modul und/oder in einer gemeinsamen Gehäuseeinheit (15) angeordnet sind und/oder dass die Recheneinheit (5) eine Kommunikationseinheit (16) zum Anbinden eines, insbesondere öffentlichen, Datennetzes umfasst.

7. Vorrichtung nach einem der Ansprüche 1 bis 6,
**dadurch gekennzeichnet,**
**dass** die Recheneinheit (5) dahingehend ausgebildet und/oder eingerichtet ist, dass die Sensoreinheit (2), insbesondere die Vielzahl von lichtempfindlichen Sensoren, nach festen, insbesondere programmierbaren, Zeitspannen und/oder Reihenfolgen ausgelesen wird, um periodisch den Füllstand zu aktualisieren.

8. System (17), umfassend eine Vorrichtung (1) nach einem der vorangehenden Ansprüche und eine Speichereinheit (18), wobei die Sensoreinheit (2) derart an oder in der Speichereinheit (18) angeordnet ist, dass ein Füllstand eines Schüttguts ermittelbar und mittels der Anzeigeeinheit (8) anzeigbar und/oder darstellbar ist.

9. System nach Anspruch 8,
**dadurch gekennzeichnet,**
**dass** die Speichereinheit (18) als Pelletspeicher (19) oder Hackschnitzelspeicher ausgebildet ist.

10. System nach Anspruch 8 oder 9,
**gekennzeichnet durch**
einen externen Empfänger, insbesondere ein Mobiltelefon, der zum Empfangen und insbesondere Darstellen von Schüttgutfüllständen der Recheneinheit (5) ausgebildet ist.

## Claims

1. A device (1) for measuring a filling level of bulk goods of a storage unit, said device having
a sensor unit (2), configured to identify a filling level of bulk goods of the storage unit, comprising illuminants (3) for generating light and light detection modules (4) for detecting the generated light,
a computing unit (5), configured to determine the filling level of the bulk goods from sensor signals of the storage unit, comprising communication modules (6) which are configured to read sensor signals of the sensor unit (2) and logic modules (7) which are configured to analyse the sensor signals and to determine a filling level of bulk goods of the storage unit and
a display unit (8), configured to output and/or depict the filling level of the bulk goods of the storage unit determined by means of the computing unit (5), the light detection modules (4) comprising a plurality of light sensitive sensors (9), and the light sensitive sensors (9) being disposed along an extension axis (E), in particular on a sensor strip (10), at a distance from each other by a distance (A, A1, A2),
**characterised in that**
the distance (A1) between a first light sensitive sensor (12) and a second light sensitive sensor (13), which are disposed next to each other along the extension axis (E), is smaller than the distance (A2) between the second light sensitive sensor (13) and a third light sensitive sensor (14), which are also disposed next to each other along the extension axis (E).

2. The device according to claim 1,
**characterised in that**
the illuminants (3) comprise a plurality of light-emitting diodes (11).

3. The device according to claim 2,
**characterised in that**
the light-emitting diodes (11) are disposed along an extension axis (E), in particular on a sensor strip (10), at a distance (B) from each other.

4. The device according to claim 2 or 3,
**characterised in that**
at least one light sensitive sensor (9) is disposed between two light-emitting diodes (11) which are disposed at a distance from each other and/or **in that** at least one light-emitting diode (11) is disposed between two light sensitive sensors (9) which are disposed at a distance from each other.

5. The device according to claim 1 and 3,
**characterised by**
at least two groups of light-emitting diodes (11) and/or light sensitive sensors (9) which are disposed along a first extension axis (E1) and at least one second extension axis (E2), the first extension axis (E1) and the second extension axis (E2) in particular being disposed in parallel.

6. The device according to any one of the claims 1 to 5,
**characterised in that**
the display unit (8) and the computing unit (5) are disposed in a module and/or in a common housing unit (15) and/or **in that** the computing unit (5) comprises a communication unit (16) for connecting a data network, in particular a public data network.

7. The device according to any one of the claims 1 to 6,
**characterised in that**
the computing unit (5) is configured and/or adapted in such a manner that the sensor unit (2), in particular the plurality of light sensitive sensors, is read at fixed time intervals, in particular programmable time intervals, and/or in fixed orders, in particular programmable orders, in order to update the filling level at regular intervals.

8. A system (17), comprising a device (1) according to any one of the preceding claims and a storage unit (18), the sensor unit (2) being disposed in such a manner at or in the storage unit (18) that a filling level of bulk goods can be identified and displayed by means of the display unit (8) and/or depicted.

9. The system according to claim 8,
**characterised in that**
the storage unit (18) is configured as a pellet storage (19) or wood chip storage.

10. The system according to claim 8 or 9,
**characterised by**
an external receiver, in particular a mobile phone, which is configured to receive and in particular depict filling levels of bulk goods of the computing unit (5).

## Revendications

1. Dispositif (1) destiné à saisir un niveau de remplissage de produits en vrac d'une unité de stockage, ledit dispositif ayant
une unité capteur (2), configurée pour établir un niveau de remplissage de produits en vrac de l'unité de stockage, comprenant des agents lumineux (3) pour produire de la lumière et des moyens de détection de la lumière (4) pour détecter la lumière produite, une unité de compte (5), configurée pour déterminer le niveau de remplissage des produits en vrac à partir de signaux de capteur de l'unité de stockage, comprenant des moyens de communication (6) qui sont configurés pour lire des signaux de capteur de l'unité capteur (2) et des moyens logique (7) qui sont configurés pour analyser les signaux de capteur et pour déterminer un niveau de remplissage de produits en vrac de l'unité de stockage et
une unité d'affichage (8), configurée pour émettre et/ou visualiser le niveau de remplissage des produits en vrac de l'unité de stockage déterminé moyennant l'unité de compte (5), lesdits moyens de détection de la lumière (4) comprenant une pluralité de capteurs (9) sensibles à la lumière, et lesdits capteurs (9) sensibles à la lumière étant disposés le long d'un axe d'étendue (E), notamment sur une barre de capteur (10), à une distance (A, A1, A2) l'un de l'autre, **caractérisé en ce que**
la distance (A1) entre un premier capteur (12) sensible à la lumière et un deuxième capteur (13) sensible à la lumière, qui sont disposés l'un à côté de l'autre le long de l'axe d'étendue (E), est inférieure à la distance (A2) entre le deuxième capteur (13) sensible à la lumière et un troisième capteur (14) sensible à la lumière, qui sont aussi disposés l'un à côté de l'autre le long de l'axe d'étendue (E).

2. Dispositif selon la revendication 1,
**caractérisé en ce que**
les agents lumineux (3) comprennent une pluralité de diodes lumineux (11).

3. Dispositif selon la revendication 2,
**caractérisé en ce que**
les diodes lumineux (11) sont disposées le long d'un axe d'étendue (E), notamment sur une barre de capteur (10), à une distance (B) l'une de l'autre.

4. Dispositif selon la revendication 2 ou 3,
**caractérisé en ce**
**qu'**au moins un capteur (9) sensible à la lumière est dispose entre deux diodes lumineux (11) qui sont disposées à une distance l'une de l'autre et/ou **en ce qu'**au moins une diode lumineuse (11) est disposée entre deux capteurs (9) sensibles à la lumière qui sont disposés à une distance l'un de l'autre.

5. Dispositif selon la revendication 1 et 3,
**caractérisé par**
au moins deux groupes de diodes lumineuses (11) et/ou capteurs (9) sensibles à la lumière qui sont disposés le long d'un premier axe d'étendue (E1) et au moins un deuxième axe d'étendue (E2), ledit premier axe d'étendue (E1) et ledit deuxième axe d'étendue (E2) notamment étant disposés en parallèle.

6. Dispositif selon l'une quelconque des revendications 1 à 5,
**caractérisé en ce que**
l'unité d'affichage (8) et l'unité de compte (5) sont disposées dans un module et/ou dans une unité de boîtier (15) commune et/ou **en ce que** l'unité de compte (5) comprend une unité de communication (16) pour relier un réseau de données, notamment un réseau de données public.

7. Dispositif selon l'une quelconque des revendications 1 à 6,
**caractérisé en ce que**
l'unité de compte (5) est configurée et/ou adaptée de telle manière que l'unité capteur (2), notamment la pluralité de capteurs sensibles à la lumière, est lue après des intervalles de temps fixes, notamment des intervalles de temps programmables, et/ou par des ordres fixes, notamment des ordres programmables, pour mettre le niveau de remplissage à jour périodiquement.

8. Système (17), comprenant un dispositif (1) selon l'une quelconque des revendications précédentes et une unité de stockage (18), l'unité capteur (2) étant disposée à ou dans l'unité de stockage (18) de telle manière qu'un niveau de remplissage d'un produit en vrac peut être établi, et affiché et/ou visualisé moyennant l'unité d'affichage (8).

9. Système selon la revendication 8,
**caractérisé en ce que**
l'unité de stockage (18) est configurée comme stockage de granulés (19) ou stockage de plaquettes forestières.

10. Système selon la revendication 8 ou 9,
**caractérisé par**
un récepteur externe, notamment un téléphone portable, qui est configuré pour recevoir et notamment visualiser de niveaux de remplissage de produits en vrac de l'unité de compte (5).
